Europäisches Patentamt

European Patent Office

Office européen des brevets

(11) Numéro de publication : **0 446 118 A1**

(12) **DEMANDE DE BREVET EUROPEEN**

(21) Numéro de dépôt : 91400588.9

(51) Int. Cl.⁵ : **F16B 12/46**

(22) Date de dépôt : 05.03.91

(30) Priorité : 06.03.90 FR 9002811

(43) Date de publication de la demande :
**11.09.91 Bulletin 91/37**

(84) Etats contractants désignés :
**AT BE CH DE DK ES GB GR IT LI LU NL SE**

(71) Demandeur : **NORA DISTRIBUTION S.A.**
**13, rue des Aulnes**
**F-67720 Hoerdt (FR)**

(72) Inventeur : **Maier, Robert**
**14, rue de l'Eglise**
**F-67720 Hoerdt (FR)**
Inventeur : **Altmeyer, Roland**
**20, rue des Païens**
**F-67720 Hoerdt (FR)**

(74) Mandataire : **Hasenrader, Hubert et al**
**Cabinet BEAU DE LOMENIE 55, rue**
**d'Amsterdam**
**F-75008 Paris (FR)**

(54) **Pièce d'angle pour l'assemblage des côtés d'un cadre et dispositif pour assembler plusieurs cadres.**

(57) La présente invention concerne des cadres en plastique (2, 3) pour équipement signalétique. Chaque cadre (2, 3) est formé par des profilés (9, 18) présentant une cavité intérieure (14) pour l'accouplement de la pièce d'angle (4) et des cavités latérales (13, 14) ouvertes sur les bords du profilé par une fente (11a), pour recevoir le bord d'un panneau de signalisation (8) ou un dispositif de jonction (16) de deux cadres (2, 3). La pièce d'angle (4) comporte deux éléments d'angle (25a, 25b) reliés entre eux par des entretoises (26) et des moyens d'encliquetage. Le dispositif de jonction (16) comporte des gorges (24a, 24b) pour recevoir les lèvres (11) formant les bords de la fente (11a).

EP 0 446 118 A1

Jouve, 18, rue Saint-Denis, 75001 PARIS

FIG. 5

## PIECE D'ANGLE POUR L'ASSEMBLAGE DES COTES D'UN CADRE ET DISPOSITIF POUR ASSEMBLER PLUSIEURS CADRES

La présente invention se rapporte à des cadres en plastique pour équipement signalétique, dans lesquels on peut glisser un carton ou un tableau d'affichage par une fente prévue sur l'un des côtés du cadre. Ces cadres peuvent être utilisés individuellement ou en combinaison sous forme d'un présentoir obtenu en assemblant plusieurs cadres entre eux. Ils peuvent être fixés au mur ou, au contraire, pendus au plafond ou supportés par des pieds de telle manière que les deux faces du cadre puissent être utilisées pour l'affichage.

Il est déjà connu de réaliser de tels cadres en découpant, à la bonne dimension, les côtés du cadre dans un profilé extrudé et en reliant lesdits côtés par des pièces d'angle.

La présente invention se rapporte plus précisément à la pièce d'angle reliant deux côtés adjacents.

La demande de brevet européenne EP 0 141 823 concerne un mode de réalisation d'une pièce d'angle constituée par deux éléments d'angle identiques reliés par un moyen de fixation. Chaque élément d'angle comporte un demi-cylindre qui s'étend d'un côté du plan bissecteur et au-delà du plan de symétrie et un évidement situé de l'autre côté du plan bissecteur et en deça du plan de symétrie. Cet évidement est prévu pour recevoir le demi-cylindre de l'autre élément d'angle, l'ensemble formant ainsi les moyens de fixation des deux éléments d'angle. Ce mode de fixation permet de réaliser la pièce d'angle à l'aide de deux éléments d'angle identiques. Il a toutefois l'inconvénient de nécessiter un moule de fabrication de l'élément d'angle qui ait une forme complexe et qui soit donc coûteux à fabriquer, du fait de la présence de l'évidement et du demi-cylindre. De plus, la pièce d'angle obtenue par montage présente un cylindre reliant les deux parois latérales qui est fendue longitudinalement ce qui diminue la solidité de la pièce.

Enfin, si l'on veut réaliser des cadres qui diffèrent entre eux par l'épaisseur des profilés formant leurs côtés, il est nécessaire d'avoir à disposition plusieurs éléments d'angle qui diffèrent entre eux par la longueur de leur demi-cylindre. Ceci nécessite des moules différents pour leur fabrication et plusieurs types d'éléments d'angle en stock.

Le but de la présente invention est de pallier ces inconvénients.

L'invention concerne une pièce d'angle pour l'assemblage de deux côtés contigus d'un cadre, du type comportant deux éléments d'angle identiques présentant chacun deux pattes décalées angulairement et une portion médiane reliant lesdites pattes, lesdits éléments d'angle étant fixés entre eux par des moyens de fixation et disposés symétriquement de part et d'autre d'un plan de symétrie qui coïncide avec le plan du cadre de telle manière que ladite pièce d'angle présente à chacune de ses extrémités une paire de pattes parallèles et espacées, ladite pièce d'angle étant destinée à relier deux côtés d'un cadre situés de manière contiguë à ladite pièce d'angle, lesquels côtés sont tubulaires ou profilés et sont conçus pour recevoir dans leur cavité intérieure lesdites paires de pattes, chaque paire de pattes ayant une forme qui lui permet d'être complémentaire de ladite cavité pour s'accoupler avec cette dernière de façon que les pattes de ladite paire de pattes puissent être introduites par guidage et avec un certain frottement dans la cavité du profilé.

L'invention atteint son but par le fait que ladite pièce d'angle comporte, de plus, au moins une entretoise disposée perpendiculairement audit plan de symétrie au droit des portions médianes des deux éléments d'angle, et par le fait que les moyens de fixation sont constitués par des organes de raccordement par emboîtement prévus entre ladite entretoise et lesdits éléments d'angle, chaque entretoise faisant corps à chacune de ses extrémités avec l'un des éléments coopérants de l'organe de raccordement par emboîtement correspondant dont l'autre des éléments coopérants fait corps avec l'élément d'angle contigu à ladite extrémité d'entretoise.

Grâce à cette disposition, les éléments d'angle sont réalisés avec des moules de construction simple. L'épaisseur de la pièce d'angle, qui est fonction de l'épaisseur des profilés formant les côtés du cadre, peut être modifiée par changement d'entretoise.

De façon avantageuse, la pièce d'angle comporte deux entretoises espacées disposées symétriquement par rapport à un plan bissecteur empruntant la bissectrice de l'angle entre les paires de pattes de la pièce d'angle, ce plan bissecteur étant perpendiculaire au plan de symétrie.

De préférence, l'entretoise est constituée d'un manchon cylindrique présentant à chaque extrémité une rainure annulaire ouverte sur cette face d'extrémité et destinée à loger une nervure annulaire prévue en correspondance sur l'élément d'angle.

Ladite rainure annulaire est disposée de préférence sur la périphérie de l'extrémité de l'entretoise.

La présente invention concerne également un dispositif pour relier entre eux deux côtés juxtaposés de cadres, lesdits côtés juxtaposés étant réalisés à partir de profilés comportant deux parois latérales formant les faces avant et arrière desdits cadres, lesdites parois latérales étant reliées par au moins une cloison transversale, lesdits profilés présentant chacun sur leurs bords en vis-à-vis une fente longitudinale délimitée par deux lèvres espacées s'étendant vers le plan de symétrie du cadre correspondant et raccordée chacune à la paroi latérale correspondante, lesdites lèvres et ladite cloison transversale délimitant avec lesdites parois latérales une cavité latérale communiquant avec l'extérieur par ladite fente.

De tels profilés de cadre sont couramment employés et il est connu de solidariser deux côtés juxtaposés de cadres en utilisant une tige en U dont chaque branche loge dans l'une des deux cavités latérales, ladite tige étant introduite dans lesdites cavités par les faces d'extrémité des profilés correspondants. Ceci nécessite un démontage au moins partiel des pièces d'angle de chaque cadre.

Le but de la présente invention est de pallier cet inconvénient et de proposer un dispositif pour relier les côtés juxtaposés de cadre qui permette de réaliser la liaison desdits cadres sans démontage des pièces d'angle.

Le but est atteint selon l'invention par le fait que ledit dispositif est caractérisé en ce qu'il est constitué d'un corps monobloc comportant sur chacune de ses faces latérales une gorge susceptible de loger au moins partiellement deux lèvres contiguës desdits profilés juxtaposés, ledit corps monobloc logeant dans l'espace constitué par lesdites cavités latérales juxtaposées, et en ce qu'il est prévu des moyens de blocage empêchant la rotation dudit corps par rapport aux axes desdits profilés, ledit corps étant susceptible d'être encliqueté sur lesdits profilés.

Avantageusement, les moyens de blocage dudit corps sur chacun desdits profilés comportent une nervure coopérant avec une rainure.

De préférence, ladite rainure est prévue dans la cloison du profilé en regard de la fente.

Avantageusement, les parois latérales du corps sont inclinées à partir des bords des gorges latérales, de part et d'autre desdites gorges et en direction du plan de symétrie des cadres correspondants.

Grâce à cette disposition, on peut disposer un ou plusieurs dispositifs selon l'invention, par encliquetage, sur un premier côté de l'un des cadres. Ces dispositifs peuvent alors être répartis par coulissement le long de ce côté. Le deuxième cadre est relié au premier cadre en encliquetant l'un de ses côtés sur les dispositifs positionnés sur ledit premier côté.

D'autres avantages et caractéristiques de l'invention apparaîtront à la lecture de la description suivante faite à titre d'exemple et en référence aux dessins annexés sur lesquels :

- la figure 1 montre une combinaison de deux cadres comportant des pièces d'angle conformes à la présente invention,
- la figure 2 est une coupe d'un profilé formant un côté standard du cadre,
- la figure 3 est une coupe d'un profilé permettant de former un côté avec fente pour l'introduction d'un panneau de signalisation,
- la figure 4 montre en perspective et à plus grande échelle une pièce de jonction de deux cadres,
- la figure 5 montre en perspective et en éclaté une pièce d'angle selon l'invention,
- la figure 6 est une vue de face d'un élément d'angle,
- la figure 7 est une vue de côté du même élément d'angle,
- la figure 8 est une vue arrière du même élément d'angle, et
- la figure 9 est une coupe à plus grande échelle d'une entretoise.

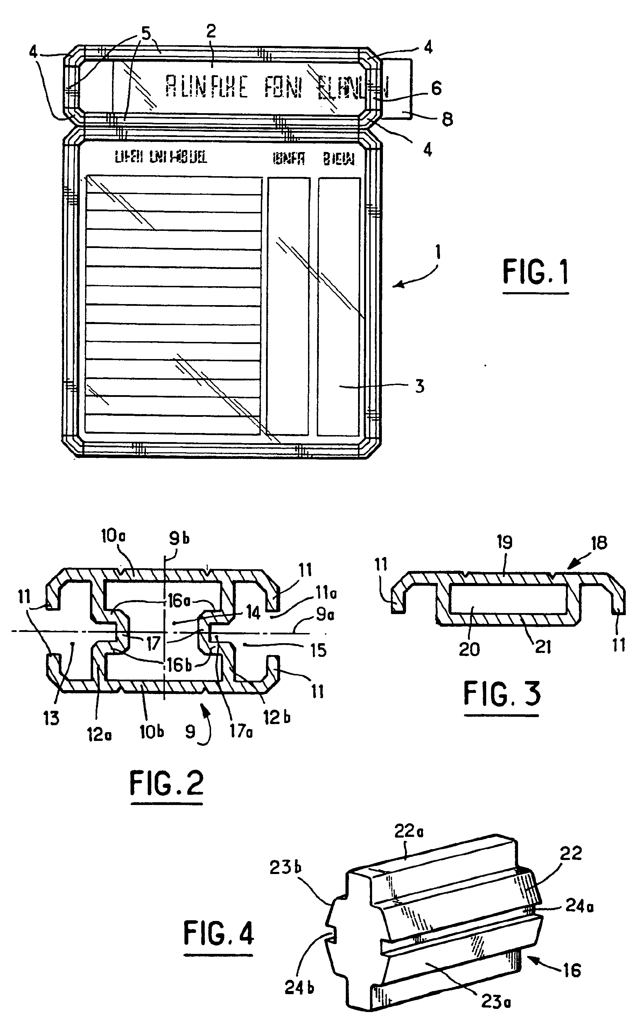

On voit sur la figure 1 un panneau d'affichage 1 constitué de deux cadres juxtaposés 2 et 3. Les deux cadres 2 et 3 ont la même largeur et des hauteurs différentes, le cadre le plus petit 2 étant disposé au-dessus du cadre 3 qui a la plus grande largeur.

Les deux cadres 2 et 3 ont la même structure et seul le cadre 2 sera décrit en détail ci-dessous.

Le cadre 2 est réalisé en assemblant, à l'aide de quatre pièces d'angle 4, les trois côtés standard 5 préalablement découpés à bonne longueur dans des profilés extrudés 9, et un côté latéral 6 comportant une fente permettant le passage d'un panneau de signalisation 8, ledit côté latéral 6 étant réalisé avec des profilés extrudés 18.

La figure 2 montre la section d'un profilé 9 utilisé pour réaliser un côté standard 5 du cadre 2. Le profilé 9 montré sur le dessin présente deux plans de symétrie 9a et 9b perpendiculaires entre eux et passant par l'axe du profilé 9. L'un de ces plans de symétrie 9a coïncide avec le plan médian du cadre 2. Le profilé 9 comporte deux parois 10a et 10b disposées de part et d'autre du plan de symétrie 9a, qui se terminent sur leurs bords latéraux par des lèvres 11 qui s'étendent vers le plan de symétrie 9a et qui délimitent entre elles une fente 11a. Les deux parois 10a et 10b qui forment les faces avant et arrière du cadre 2 sont reliées entre elles par des cloisons transversales 12a et 12b disposées de manière symétrique de chaque côté du plan de symétrie 9b. Grâce à cette disposition, le profilé 9 délimite deux espaces latéraux 13 et 15 et un espace médian 14. Les espaces latéraux 13 et 15 se présentent sous la forme de rainures ouvertes vers l'extérieur du cadre 2, la rainure 13 étant destinée à loger le bord du panneau de signalisation 8 et étant dirigée vers l'intérieur du cadre 2, la rainure 15 étant au contraire ouverte sur le bord extérieur du cadre 2 et étant destinée à coopérer, grâce aux lèvres correspondantes 11, avec des moyens de jonction 16 des deux cadres juxtaposés 2 et 3. L'espace médian 14 situé entre les cloisons transversales 12a et 12b constitue, pour le profilé 9, une cavité intérieure qui débouche sur les faces d'extrémité du profilé 9 et il est destiné à recevoir des moyens d'accouplement prévus aux extrémités des pièces d'angle 4. Les cloisons transversales 12a et 12b comportent des portions 16a et 16b parallèles aux parois 9a et 9b pour que la cavité intérieure 14 présente un rétrécissement dans le plan de symétrie 9a, les portions 16a et 16b de chaque cloison transversale 12a ou 12b étant reliées par une portion centrale 17 et délimitant avec cette portion centrale 17 une rainure 17a du côté de la fente 11a. La largeur de la fente 11a est supérieure à celle de la rainure 17a.

La figure 3 montre la section d'un profilé 18 qui, en combinaison avec lui-même, permet de réaliser le côté latéral 6 qui comporte une fente pour introduire le panneau de signalisation 8. Ce profilé 18 présente une paroi latérale 19 semblable à l'une des parois 10a et 10b du profilé 9, et formant soit la face avant soit la face arrière du cadre 2 et se terminant par deux lèvres 11, ainsi qu'une cavité intérieure 20 dont la section est sensiblement égale à la section de la partie latérale de la cavité 14 du profilé 9. La cavité intérieure 20 débouche sur la face d'extrémité du profilé 18. Cette cavité intérieure 20 est destinée à loger une patte prévue à l'extrémité de la pièce d'angle 4, et elle est délimitée, du côté du plan de symétrie 9a, par une cloison 21 ayant une section en U.

La figure 4 montre en perspective les moyens de jonction 16 de deux cadres juxtaposés 2 et 3. Ces moyens de jonction 16 sont formés par un corps monobloc 22 présentant sur des faces opposées 23a et 23b des gorges 24a et 24b susceptibles de loger les lèvres 11 délimitant les rainures 15 des côtés adjacents 5 des deux cadres 2 et 3. Le corps monobloc 22 est conformé pour loger dans ces deux rainures 15 et lier ainsi deux cadres juxtaposés 2 et 3. Les faces latérales 23a et 23b sont inclinées, de part et d'autre des gorges 24a et 24b, de telle manière que chaque moitié du corps monobloc 22 puisse être introduit dans une rainure latérale de profilé 15 par encliquetage des deux lèvres 11 de ce profilé 9 dans les gorges 24a et 24b. Les faces latérales 23a et 23b sont ainsi inclinées à partir des bords des gorges latérales 24a et 24b, de part et d'autre desdites gorges et en direction du plan de symétrie 9a des cadres 2 et 3 juxtaposés. Les extrémités du corps monobloc 22 éloignées des gorges 24a et 24b se présentent sous la forme de nervures 22a qui logent chacune dans une rainure 17a et empêchent la rotation dudit corps monobloc par rapport aux axes des profilés 9 qui les portent. Il est évidemment possible de positionner plusieurs corps monobloc 22 dans une fente 11a d'un profilé 9, et ces corps monobloc 22 peuvent coulisser en force le long d'un profilé 9.

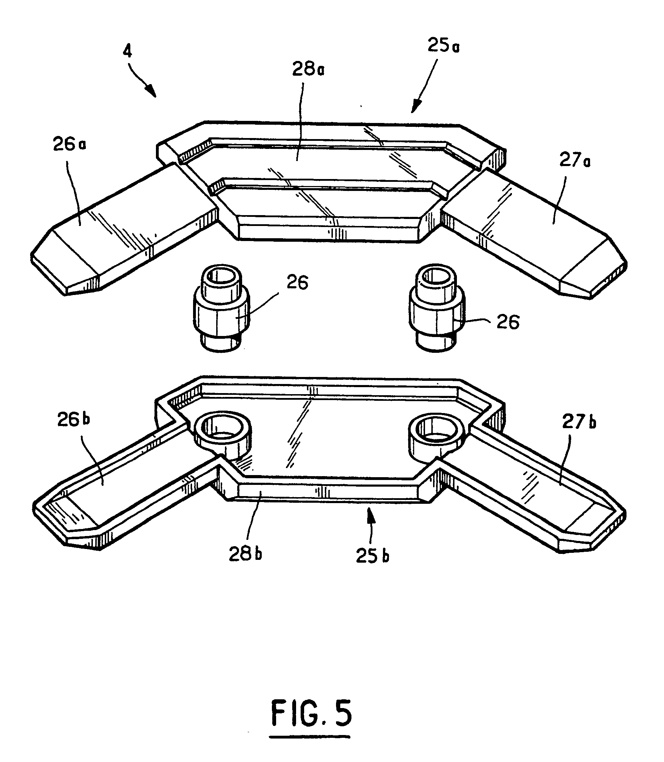

La pièce d'angle 4, montrée sur les figures 5 à 9, est formée de deux éléments d'angle identiques 25a et 25b disposés de part et d'autre du plan de symétrie 9a. Ces éléments d'angle 25a et 25b sont reliés par deux entretoises 26 perpendiculaires au plan de symétrie 9a. Des moyens de fixation sont prévus à chaque extrémité d'entretoise. L'élément d'angle 25a présente deux pattes 26a et 27a reliées par une portion médiane 28a. L'élément d'angle 26a présente également deux pattes 26b et 27b reliées par une portion médiane 28b. Les pattes 26a et 26b sont parallèles entre elles et espacées et elles forment une paire de pattes susceptibles de s'accoupler avec la cavité intérieure 14 du profilé 9 ou avec deux cavités intérieures 20 du profilé 18. De la même façon les pattes 27a et 27b sont parallèles entre elles et espacées et elles s'accouplent avec la cavité intérieure 14 ou les cavités intérieures 20 d'un autre côté du cadre 2.

Comme on le voit sur ces figures, les portions médianes 28a et 28b des éléments d'angle 25a et 25b présentent une face extérieure destinée à être dans le prolongement des faces latérales des profilés 9 et 18, qui forment les faces avant et arrière du cadre 2, et elles sont formées par une paroi mince qui se retourne sur ses bords vers le plan de symétrie 9a par des lèvres de renforcement 29. De même les pattes 26a, 26b, 27a et 27b sont formées par une paroi mince comportant également une lèvre de renforcement 30 sur son pourtour qui vient en appui sur les portions 16a et 16b des cloisons transversales 12a et 12b du profilé 9 ou sur la cloison 21 du profilé 18. Les faces des lèvres de renforcement 29 et 30 situées du côté du plan de symétrie 9a sont disposées dans un même plan parallèle au plan de symétrie 9a. L'épaisseur des lèvres de renforcement 30 est inférieure à l'épaisseur des lèvres de renforcement 29. Les pattes 26a, 26b, 27a et 27b ont une extrémité qui se termine légèrement en pointe de manière à faciliter l'introduction de la paire de pattes 26a-26b ou 27a-27b dans la cavité 14 du profilé 9 ou dans les cavités 20 des deux profilés 18 formant le côté avec fente 6.

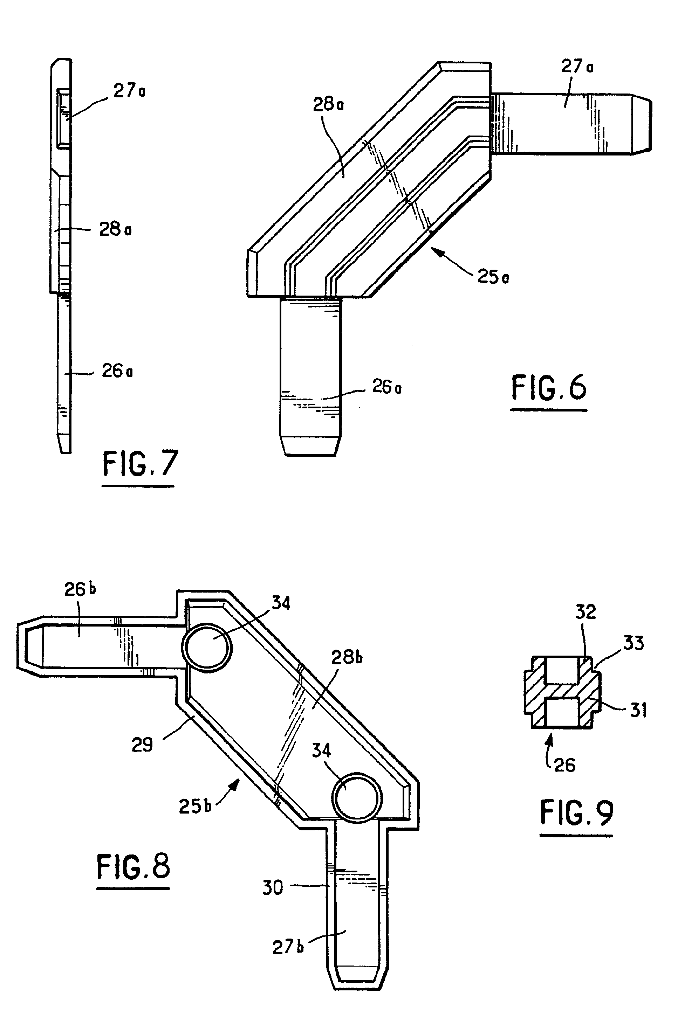

L'entretoise 26 est constituée par un manchon cylindrique 31 qui présente à chaque extrémité 32 une gorge annulaire 33 ouverte sur la face d'extrémité du manchon 31. Cette gorge annulaire 33 est destinée à recevoir par encliquetage une nervure annulaire 34 prévue en correspondance dans la portion médiane 28a et 28b. L'extrémité 32 de l'entretoise 26, avec sa gorge annulaire 33, constitue ainsi l'un des éléments coopérants d'un organe de raccordement par emboîtement reliant l'entretoise 26 à l'élément d'angle correspondant 25a ou 25b, l'autre élément coopérant de cet organe de raccordement par emboîtement étant formé par la nervure annulaire 34. De préférence, la gorge annulaire 33 est disposée à la périphérie de l'extrémité d'entretoise 32, comme on le voit sur la figure 9, mais cette gorge 33 pourrait également se trouver au voisinage de l'alésage du manchon 31.

De façon avantageuse, les éléments d'angle 25a et 25b sont symétriques par rapport à un plan bissecteur perpendiculaire au plan de symétrie 9a et contenant la bissectrice de l'angle formé par les deux pattes correspondantes 26a-27a ou 26b-27b.

Les éléments d'angle 25a et 25b présentés sur les dessins permettent de réaliser des cadres à coins coupés. Il va de soi que l'on peut réaliser de la même manière des cadres à coins arrondis.

Il est également possible de réaliser un cadre dont chaque côté est formé par deux profilés juxtaposés dans un même plan et reliés par des moyens de jonction 16, dont les coins sont formés par deux pièces d'angle 4 juxtaposées et dimensionnées pour que la face externe de la pièce d'angle 4 située du côté intérieur du cadre 2 soit accolée à la face interne de la pièce d'angle 4 située du côté extérieur du cadre 2.

La fente 11a séparant les deux profilés 18 et permettant l'introduction du panneau d'affichage 8 a une épaisseur qui est fonction de la taille de la portion centrale 17 des cloisons transversales 12a et 12b. La longueur des entretoises 26 est naturellement fonction de cette épaisseur. On peut donc utiliser les mêmes éléments d'angle 25a et 25b quelle que soit l'épaisseur de la fente. Il suffit de choisir des entretoises 26 ayant la longueur appropriée.

## Revendications

1. Pièce d'angle pour l'assemblage de deux côtés (5, 6) contigus d'un cadre (2, 3) du type comportant deux éléments d'angle (25a, 25b) identiques présentant chacun deux pattes (26a, 27a ; 26b, 27b) décalées angulairement et une portion médiane (28a, 28b) reliant lesdites pattes (26a, 27a ; 26b, 27b), lesdits éléments d'angle (25a, 25b) étant fixés entre eux par des moyens de fixation et disposés symétriquement de part et d'autre d'un plan de symétrie (9a) qui coïncide avec le plan du cadre (2, 3) de telle manière que ladite pièce d'angle (4) présente à chacune de ses extrémités une paire de pattes (26a, 26b ; 27a, 27b) parallèles et espacées,
ladite pièce d'angle (4) étant destinée à relier deux côtés (5) d'un cadre (1) situés de manière contigüe à ladite pièce d'angle (4), lesquels côtés sont tubulaires ou profilés et sont conçus pour recevoir dans leur cavité intérieure (14, 20) lesdites paires de pattes (26a, 26b ; 27a, 27b), chaque paire de pattes ayant une forme qui lui permet d'être complémentaire de ladite cavité (14, 20) pour s'accoupler avec cette dernière de façon que les pattes de ladite paire de pattes puissent être introduites par guidage et avec un certain frottement dans la cavité (14, 20) du profilé (9, 18),
ladite pièce d'angle (4) étant caractérisée en ce qu'elle comporte, de plus, au moins une entretoise (26) disposée perpendiculairement audit plan de symétrie (9a) au droit des portions médianes (28a, 28b) des deux éléments d'angle (25a, 25b), et
en ce que les moyens de fixation sont constitués par des organes de raccordement par emboîtement (32, 33, 34) prévus entre ladite entretoise (26) et lesdits éléments d'angle (25a, 25b), chaque entretoise (26) faisant corps à chacune de ses extrémités (32) avec l'un des éléments coopérants (32, 33) de l'organe de raccordement par emboîtement correspondant dont l'autre des éléments coopérants (24) fait corps avec l'élément d'angle (25a, 25b) contigu à ladite extrémité d'entretoise (32).

2. Pièce d'angle selon la revendication 1 caractérisée en ce qu'elle comporte deux entretoises (26) espacées disposées symétriquement par rapport à un plan bissecteur empruntant la bissectrice de l'angle entre les paires de pattes de la pièce d'angle, ce plan bissecteur étant perpendiculaire au plan de symétrie.

3. Pièce d'angle selon l'une quelconque des revendications 1 et 2, caractérisée en ce que l'entretoise (26) est constituée d'un manchon cylindrique (31) présentant à chaque extrémité (32) une rainure annulaire (33) ouverte sur cette face d'extrémité (32), destinée à loger une nervure annulaire (34) prévue en correspondance sur l'élément d'angle (25a, 25b).

4. Pièce d'angle selon la revendication 4 caractérisée en ce que ladite rainure annulaire (33) est disposée sur la périphérie de de l'extrémité de l'entretoise (26).

5. Dispositif pour relier entre eux deux côtés (5) juxtaposés de cadres (2, 3), lesdits côtés (5) juxtaposés étant réalisés à partir de profilés (9) comportant deux parois latérales (10a, 10b) formant les faces avant et arrière desdits cadres, lesdites parois latérales (10a, 10b) étant reliées par au moins une cloison transversale (12a, 12b), lesdits profilés (9) présentant chacun sur leurs bords en vis-à-vis une fente longitudinale (11a) délimitée par deux lèvres espacées (11) s'étendant vers le plan de symétrie (9a) du cadre correspondant et raccordées chacune à la paroi latérale (10a, 10b) correspondante, lesdites lèvres (11) et ladite cloison transversale (12a) délimitant avec lesdites parois latérales (10a, 10b) une cavité latérale (15) communiquant avec l'extérieur par ladite fente (11a),
caractérisé en ce qu'il est constitué d'un corps monobloc (22) comportant sur chacune de ses faces latérales (23a, 23b) une gorge (24a, 24b) susceptible de loger au moins partiellement deux lèvres contigües (11) desdits profilés juxtaposés (9), ledit corps monobloc (22) logeant dans l'espace constitué par lesdites cavités latérales juxtaposées, et en ce qu'il est prévu des moyens de blocage empêchant la rotation dudit corps par rapport aux axes desdits profilés, ledit corps étant susceptible d'être encliqueté sur lesdits profilés.

6. Dispositif selon la revendication 5 caractérisé en ce que les moyens de blocage dudit corps (22) sur chacun desdits profilés (9) comportent une nervure (22a) coopérant avec une rainure (17a).

7. Dispositif selon l'une quelconque des revendications 5 et 6 caractérisé en ce que ladite rainure (17a) est prévue dans la cloison du profilé (12a) en regard de la fente (11a).

8. Dispositif selon l'une quelconque des revendications 5 à 7 caractérisé en ce que les faces latérales (23a, 23b) du corps (22) sont inclinées à partir des bords des gorges latérales (24a, 24b), de part et d'autre desdites gorges (24a, 24b) et en direction du plan de symétrie (9a) des cadres correspondants (2, 3).

FIG. 1

FIG. 2

FIG. 3

FIG. 4

## FIG. 5

FIG.7

FIG.6

FIG.8

FIG.9

**Office européen des brevets**

# RAPPORT DE RECHERCHE EUROPEENNE

Numero de la demande

EP    91 40 0588

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-4702638 (ZALESAK) <br> * abrégé; figures 2, 8 * <br> --- | 1 | F16B12/46 |
| A | BE-A-680025 (MÜLDE KUNSTSTOFFSPRITZEREI) <br> * figures 4, 6 * <br> --- | 1 | |
| A | WO-A-8404366 (JOHANSSON) <br> * figures 1, 2 * <br> & EP-A-0141823 <br> --- | 1 | |
| A | DE-A-2230796 (DUPREE) <br> ----- | | |

**DOMAINES TECHNIQUES RECHERCHES (Int. Cl.5 )**

F16B

Le présent rapport a été établi pour toutes les revendications

| Lieu de la recherche | Date d'achèvement de la recherche | Examinateur |
|---|---|---|
| BERLIN | 16 MAI 1991 | SCHAEFFLER C.A.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..................................................................

& : membre de la même famille, document correspondant

EPO FORM 1503 03.82 (P0402)